# EUROPEAN PATENT SPECIFICATION

(11) **EP 1 673 968 B1**
(45) Date of publication and mention of the grant of the patent: **21.01.2009**
(21) Application number: 05380275.7
(22) Date of filing: 22.12.2005
(51) Int. Cl.: A01B 33/02, A01B 33/16

(54) **Agricultural machine**
Landwirtschaftliche Maschine
Machine agricole

(30) Priority: 23.12.2004 ES 200403071
(43) Date of publication of application: 28.06.2006
(73) Proprietor: Howard Ibérica S.A., 08520 Les Franqueses del Vallès (ES)
(72) Inventor: Silvestre Padros, Juan, 08445-Canoves (Barcelona) (ES); Sabé Ambros, Jaume, 08450-Llinars del Vallès (Barcelona) (ES)
(74) Representative: Curell Aguilà, Marcelino

(56) References cited:
- EP-A- 0 780 047
- GB-A- 2 037 551
- GB-A- 2 141 611
- US-A- 3 029 879
- US-A- 3 542 133
- US-A- 5 348 103

## Description

### Field of the invention

The invention relates to an agricultural machine having a processing chamber in which an object or material is processed, a first wall surrounding the processing chamber, an inlet opening provided in the lower part of the processing chamber, communicating the processing chamber with the outside, the inlet opening having a front edge, and a rotary mechanism arranged in the processing chamber, defining an horizontal rotation axis and which causes the acceleration of the object or material and the projection thereof against the first wall, where the front edge receives impacts from the object or material accelerated by the rotary mechanism.

### State of the art

Agricultural machines of the type indicated above are known. Preferably they are machines suitable for being attached to an agricultural vehicle, such as for example a tractor, and which are used to process objects and/or materials in crop fields, whereby they are driven by the agricultural vehicle through said crop fields. They can have some independent power supply, but preferably they usually receive the necessary power to move their mechanisms from the agricultural vehicle, which supplies the necessary power to the agricultural machine by means of mechanical, hydraulic and electrical, etc. connections.

Typical examples of this type of agricultural machines are organic waste crushers, rotary tillers and stone buriers. This way, the objects or materials to be crushed can, for example, be organic pruning remains, clumps of earth and/or loose earth mixed with stones, etc. In other words, the material or object processed can be discrete objects, such as small twigs, or semi-continuous elements such as loose earth, or mixtures of both, such as earth mixed with stones.

Usually, the processing chamber is a substantially cylindrical chamber having its axis substantially parallel to (or coinciding with) the rotational axis of the rotary mechanism. In these circumstances, the first wall, which is the side wall (or one of the side walls) of the cylindrical chamber, is usually the top wall or includes the top wall of the processing chamber.

However, the known machines suffer from a series of drawbacks:
- their have a poor aesthetic appearance after a few hours of use,
- they have serious perforation problems,
- the earth tends to stick to the inside of the machine hindering and even preventing it from working properly,
- they are very noisy.

Document EP 0 780 047 A1 discloses a rotary cultivator according to the preamble of claim 1, with a processing chamber which comprises a first wall with a rear edge. The rear edge is hinged with respect to the first wall via a rotation axis. The rear edge absorbs the impacts from the material processed by means of a complex dampening system.

### Summary of the invention

The object of the invention is to overcome these drawbacks. This purpose is achieved by means of an agricultural machine of the type defined in claim 1.

In effect, the invention solves the problems indicated above by providing the agricultural machine with a device for absorbing the kinetic energy of the material or object to be processed. The front edge of the inlet opening receives the impacts and, since it can rotate with respect to a second rotation axis, which is preferably horizontal and preferably parallel to the rotation axis of the rotary mechanism, it converts the kinetic energy of the object or material impacting on it into the kinetic energy and subsequently the potential energy of the same front edge when it rotates about the second rotation axis and raises itself above its original position. In this way, impacts that normally would have damaged the front edge are absorbed without causing any damage and without the need to reinforce the front edge in an exaggerated manner. In addition, the first wall, being made of an elastomeric material, either as a covering or either as a sheet forming the actual first wall, also takes part in absorbing the kinetic energy of the object or material to be processed, without damaging the machine and with a noticeable reduction in the noise level that is produced while the machine is operating normally.

The machine according to the invention also solves other problems, such as the problem of perforations caused by impact and/or collision (aggravated by impacts that have destroyed any type of base metal protective layer) and the problems arising from a poor aesthetic appearance after a few hours of use because of permanent deformations on the machine's front edge and/or top wall. Another advantage is that the surface of elastomeric material makes it difficult for earth to stick to its surface, which allows the machine to work in conditions where the earth has a higher moisture content than in the case of conventional machines.

The first wall is a sheet of elastomeric material, in other words it is not merely a covering, instead the whole of the first wall is a sheet of elastomeric material. This way it is possible to avail of the material's elastomeric properties to the full, said material being able to deform more freely by optimally absorbing the kinetic energy of the objects or material processed. Also, greater efficiency is achieved from the point of view of preventing the wet earth from sticking to the first wall.

The front edge is made up of a longitudinal beam joined to the machine's structure by means of hinges through which it can rotate, and it is joined to elastic means that tend to push it downwards. In fact, the longitudinal beam represents an essential minimum reinforcement and also represents a mass of certain importance that can absorb greater kinetic energies. Also, the fact that the longitudinal beam is joined to elastic means that tend to push it (or pull it) down, increases even further the capacity for absorbing kinetic energy, since, as well as converting into the kinetic energy (and potential energy) of the actual longitudinal beam it will also be converted into energy dissipated in the elastic means. The elastic means are the actual sheet of elastomeric material forming the first wall, and the hinges are also noticeably an area of the actual sheet of elastomeric material. This way it is possible to obtain the advantages indicated above with a solution having a particularly simple construction.

Advantageously the machine according to the invention has at least one end stopper that limits the rotary movement of the front edge, so as to prevent it rotating at an excessive angle and, for example, reaching a position of no-return.

Preferably the machine is a rotary tiller, particularly a rotary tiller stone burier type. It is in the rotary tiller stone burier types that the impact problem is particularly serious. The rotary tiller stone burier types lift the earth to be processed, which always has a high content of stones because it is in this type of land that it is advantageous to use these machines, so that the earth together with the stones are violently thrown against the front edge and the top wall (the first wall). In this machine all the previous advantages become particularly apparent. However, it is also advantageous that the agricultural machine is another type of machine, such as for example an organic waste crusher. These machines crush organic remains, for example organic pruning remains, that can have very different sizes and hardnesses. Also it is normal that they drag up gravel and stones together with the organic remains. Therefore these machines are also improved if the advantages of this invention are applied to them.

### Brief description of the drawings

Other advantages and characteristics of the invention are appreciated from the following description, wherein, without any limiting purpose, a preferred embodiment of the invention is described, with reference to the attached drawings, in which:
Fig. 1 is a cross sectional view of an agricultural machine according to the state of the art.
Fig. 2 is a cross sectional view of the agricultural machine of Fig. 1 in operation.
Fig. 3 is a cross sectional view of an agricultural machine according to the invention.
Fig. 4 is a cross sectional view of the agricultural machine in Fig. 3 in operation.

### Detailed description of the embodiment of the invention

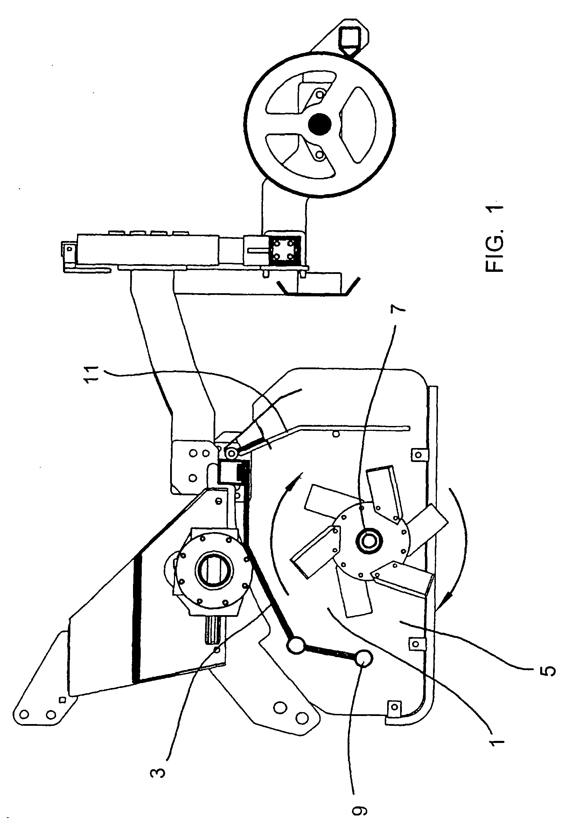

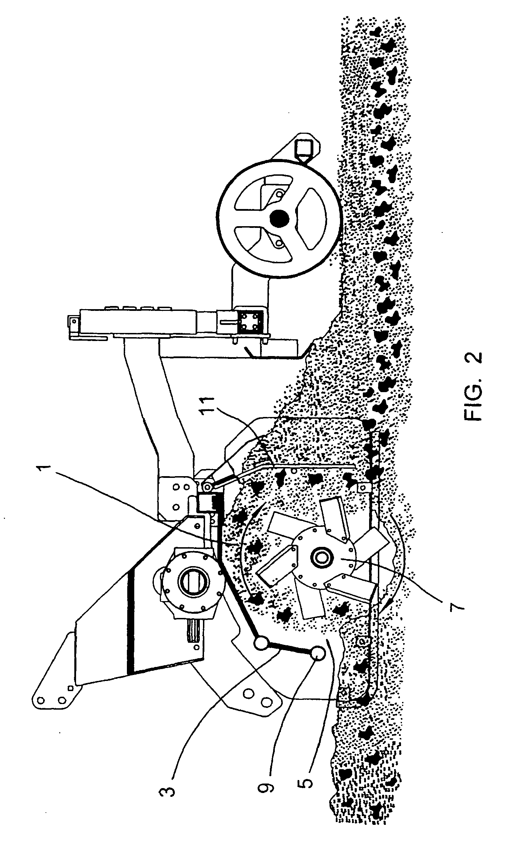

Figures 1 and 2 show an agricultural machine as it is known in the state of the art. The agricultural machine has a processing chamber 1 delimited at the top by a first wall 3 that can be made up of various sections joined together. The agricultural machine is designed to be moved along crop fields or the like, and has an inlet opening 5 on the lower front part of the processing chamber 1, so that the objects or material to be processed are collected underneath, lifted by a rotary mechanism 7 and thrown against first wall 3.

In the example of the machine shown in Fig. 1, which is a rotary tiller stone burier type, the objects or material are thrown against a front edge 9 arranged on the edge between first wall 3 and inlet opening 5. However, for example in the case of an organic waste crusher, rotary mechanism 7 could rotate in the opposite direction, in which case the part of first wall 3 that would suffer the impacts from the objects or materials to be processed more violently would be the part of first wall 3 arranged on the rear part of processing chamber 1.

In the case of rotary tiller stone burier types, as can be seen in Fig. 2, the part of first wall 3 arranged on the rear part of processing chamber 1 is a grating 11 or the like that allows earth to pass through but not stones, therefore allowing said stones to be buried.

The conventional machines, such as those shown in Figures 1 and 2, have the front part and the cover, in other words the whole of the first wall 3, made completely from a metallic plate, which is virtually always made of iron, since other metals are disregarded for economic reasons. These conventional machines usually suffer from the same problems arising from impacts from stones:
- permanent deformations in the front part of the machine,
- poor appearance after a few hours use,
- short service life of the whole chassis because of perforations,
- need for the earth to have a lower moisture content,
- problems of earth sticking to the inside of processing chamber 1,
- strong overloads throughout the transmission system.

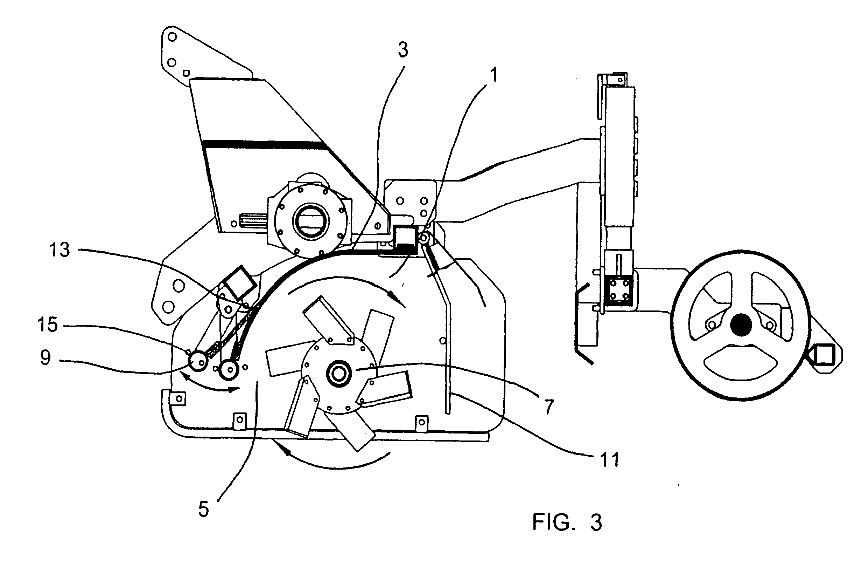

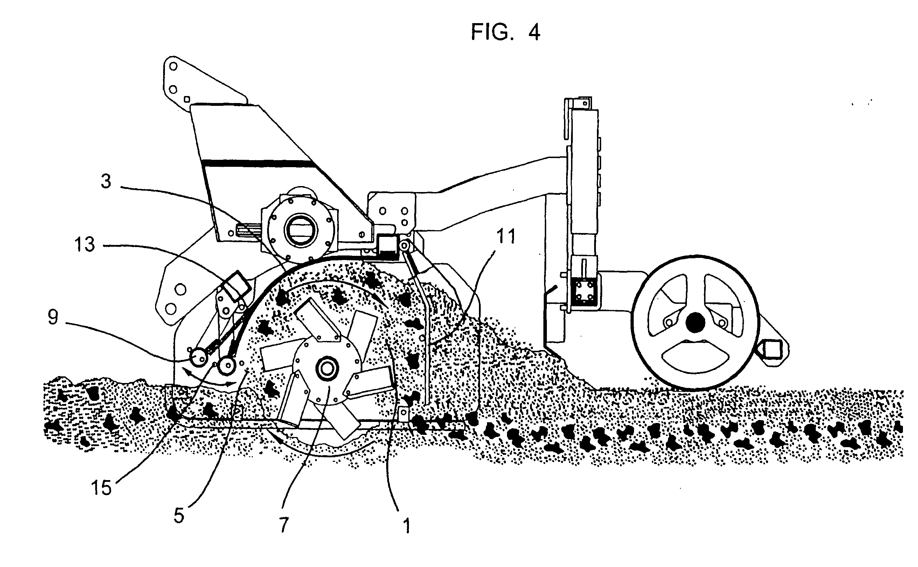

Figures 3 and 4 illustrate an agricultural machine according to the invention, which in the particular example of Figures 3 and 4 is once again a rotary tiller stone burier type. The various common elements or equivalent concepts vis-à-vis the agricultural machine in Figures 1 and 2 have been assigned the same reference numbers. In the machine according to the invention it is important to highlight that first wall 3 is made of an elastomeric material, and, it also has a whole section that is rounded, which also makes it difficult for the earth to stick to it. The fact that first wall 3 is made of an elastomeric material makes it easier to produce the rounded section, because it is easier to use metallic materials to produce walls with flat sections than with curved sections, which require more expensive tools. Also it has a front edge 9 that is hinged with respect to the rest of first wall 3 thanks to the actual elasticity of the section of elastomeric material arranged in the intermediate area, which thus performs the function of hinge 13. In addition, the elastomeric material performs the function of elastic means which dampen the movement of front edge 9.

The machine according to the invention has holes 15 in which end stoppers can be inserted to limit the travel of front edge 9.

Grating 11 could also be made optionally from an elastomeric material.

Thus, the machines according to the invention, which have the cover (in other words first wall 3) made totally of an elastomeric material such as rubber and the front tilting part, absorb impacts from stones to a greater extent, and the same rubber serves to dampen the movement of the front tilting part. This way, the machines according to the invention overcome most of the drawbacks mentioned above. The front part remains in a perfect condition throughout the machine's service life, and the vibrations and the actual rubber make it difficult for the earth to stick to the cover, which makes it possible to work when the earth has a higher moisture content.

## Claims

1. Agricultural machine having a processing chamber (1) wherein an object or material is processed, a first wall (3) surrounding said processing chamber (1), an inlet opening (5) arranged at the lower part of said processing chamber (1) and which communicates said processing chamber (1) with the outside, where said inlet opening (5) has a front edge (9), and a rotary mechanism (7) arranged in said processing chamber (1), which defines an horizontal rotation axis and causes the acceleration of said object or material and its projection against said first wall (3), where said front edge (9) receives impacts from said object or material accelerated by said rotary mechanism (7), where said front edge (9) is hinged with respect to said first wall (3) so that it is suitable for rotating with respect to a second rotation axis when receiving said impact from said object or material, and in that said first wall (3) is a sheet of elastomeric material, **characterized in that** said front edge (9) is made up of a longitudinal beam joined to the structure of said machine by means of hinges (13) through which it can rotate, and it is joined to elastic means that tend to push it downwards and **in that** said elastic means are said sheet of elastomeric material.

2. Machine according to claim 1, **characterised in that** it has at least one end stopper limiting the rotational movement of said front edge (9).

3. Machine according to one of claims 1 to 2, **characterised in that** it is a rotary tiller stone burier type.

4. Machine according to one of claims 1 to 2, **characterised in that** it is an organic waste crusher.

## Patentansprüche

1. Landwirtschaftliche Maschine mit einer Bearbeitungskammer (1), worin ein Gegenstand oder Material bearbeitet wird, wobei eine erste Wand (3) die Bearbeitungskammer (1) umgibt, eine Einlassöffnung (5) am unteren Teil der Bearbeitungskammer (1) angeordnet ist und die Bearbeitungskammer (1) mit der Außenseite verbindet, wobei die Einlassöffnung (5) eine Vorderkante (9) und einen in der Bearbeitungskammer (1) angeordneten Drehmechanismus (7) aufweist, der eine horizontale Rotationsachse definiert und die Beschleunigung des Gegenstands oder Materials sowie seinen Aufprall gegen die erste Wand (3) bewirkt, wo die Vorderkante (9) Schläge von dem durch den Drehmechanismus (7) beschleunigten Gegenstand oder Material erfährt, wobei die Vorderkante (9) bezüglich der ersten Wand (3) derart angebracht gelenkig ist, dass sie für eine Drehung um eine zweite Rotationsachse geeignet ist, wenn sie den Schlag von dem Gegenstand oder Material erhält, und dass die erste Wand (3) eine Bahn aus Elastomermaterial ist, **dadurch gekennzeichnet, dass** die Vorderkante (9) aus einem Längsträger gebildet ist, der mit der Struktur der Maschine mittels Scharnieren (13) verbunden ist, durch die er drehbar ist, und mit elastischen Mitteln verbunden ist, die dazu ausgebildet sind, ihn nach unten drücken, wobei die elastischen Mittel die Bahn aus Elastomermaterial sind.

2. Maschine nach Anspruch 1, **dadurch gekennzeichnet, dass** sie mindestens einen Endstopper aufweist, der die Drehbewegung der Vorderkante (9) begrenzt.

3. Maschine nach Anspruch 1 oder 2, **dadurch gekennzeichnet, dass** sie vom Typ einer Bodenfräse-Umkehrfräse ist.

4. Maschine nach Anspruch 1 oder 2, **dadurch gekennzeichnet, dass** sie eine Zerkleinerungseinrichtung für organische Abfallstoffe ist.

## Revendications

1. Machine agricole ayant une chambre de traitement (1) dans laquelle un objet ou matériau est traité, une première paroi (3) entourant ladite chambre de traitement (1), une ouverture d'entrée (5) agencée à la partie inférieure de ladite chambre de traitement (1) et qui fait communiquer ladite chambre de traitement (1) avec l'extérieur, où ladite ouverture d'entrée (5) possède un bord avant (9), et un mécanisme de rotation (7) agencé dans ladite chambre de traitement (1), qui définit un axe de rotation horizontal et provoque l'accélération dudit objet ou matériau et sa projection contre ladite première paroi (3), où ledit bord avant (9) reçoit des chocs provenant dudit objet ou matériau accéléré par ledit mécanisme de rotation (7), où ledit bord avant (9) est articulé par rapport à ladite première paroi (3) de sorte qu'il est capable de tourner par rapport à un deuxième axe de rotation en recevant ledit choc dudit objet ou matériau, et en ce que ladite première paroi (3) est une feuille de matériau élastomérique, **caractérisée en ce que** ledit bord avant (9) est constitué d'une poutre longitudinale reliée à la structure de ladite machine au moyen d'articulations (13) grâce auxquelles il peut tourner, et est reliée à des moyens élastiques qui ont tendance à le pousser vers le bas et **en ce que** lesdits moyens élastiques correspondent à ladite feuille de matériau élastomérique.

2. Machine selon la revendication 1, **caractérisée en ce qu'**elle possède au moins une butée d'extrémité limitant le mouvement de rotation dudit bord avant (9).

3. Machine selon l'une des revendications 1 à 2, **caractérisée en ce qu'**elle est un rotoculteur à enfouissement de pierres.

4. Machine selon l'une des revendications 1 à 2, **caractérisée en ce qu'**elle est un broyeur de déchets organiques.
